**Europäisches Patentamt**

**European Patent Office**

**Office européen des brevets**

(11) Veröffentlichungsnummer: **0 195 376**

**B1**

(12) # EUROPÄISCHE PATENTSCHRIFT

(45) Veröffentlichungstag der Patentschrift:
04.11.87

(21) Anmeldenummer: 86103436.1

(22) Anmeldetag: 14.03.86

(51) Int. Cl.⁴: **B 65 G 17/20,** B 61 B 3/00

(54) **Fördereinrichtung mit Hängeträger.**

(30) Priorität: 19.03.85 DE 3509936

(43) Veröffentlichungstag der Anmeldung:
24.09.86 Patentblatt 86/39

(45) Bekanntmachung des Hinweises auf die Patenterteilung:
04.11.87 Patentblatt 87/45

(84) Benannte Vertragsstaaten:
AT BE CH DE FR GB LI LU NL

(56) Entgegenhaltungen:
FR-A-2 167 481

(73) Patentinhaber: **Veit Gesellschaft mit beschränkter Haftung & Co., Rudolf- Diesel- Strasse 3, D-8910 Landsberg a. Lech (DE)**

(72) Erfinder: **Schönenberger, Rudolf, Dipl.- Ing. Dipl. Wirtsch., Herzogstandstrasse 7, D-8910 Landsberg (DE)**

(74) Vertreter: **Patentanwälte Grünecker, Kinkeldey, Stockmair & Partner, Maximilianstrasse 58, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

EP 0 195 376 B1

### Beschreibung

Die Erfindung betrifft eine Fördereinrichtung nach dem Oberbegriff des Anspruches 1.

Bei einer solchen, aus der Praxis bekannten Fördereinrichtung weist der schienenförmige Träger ein U-Profil auf. Der durchlaufende Quersteg bildet die Trägerstützfläche. Die Schwenkachsen sind innerhalb des U-Querschnittes angeordnet und die Hängestange mit einer an ihrem Ende angebogenen Öse daran gelagert. Eine Einschlitzung der Trägerstützfläche vom freien Ende her erlaubt das Hochschwenken der Hängestange wenigstens bis zur Senkrechten zur Trägerstützfläche, also in die Tragstellung, Soll der Träger in eine platzsparende Aufbewahrungsstellung gebracht werden muß jede Hängestange etwa um 270° geschwenkt, d. h. in das U-Profil hineingeklappt werden. Wegen der Länge der Hängestangen benötigt die Schwenkbewegung aus der einen in die andere Stellung viel freien Bewegungsraum und, vor allem in einer Umgebung von empfindlichem Hängefördergut große Achtsamkeit für die an sich einfache Bewegung. Die offene Seite des U-Profils ist für Anhängegut, insbesondere Kleiderbügel oder dergl. als Trägerstützfläche ungeeignet. Es besteht die Gefahr, daß rasch aufgehängte Bügel oder dergl. mit ihren Enden nicht über, sondern in das Profil geraten. Die Bügel können herunterfallen, unangenehm für darauf befindliche Textilien oder dergl., oder, wenn rasch in größerer Stückzahl leer aufgehängt, sich verheddern und den Beladungsprozeß verzögern. Der lange Schwenkweg kann also nicht durch eine umgekehrte Verwendung des Tragbügels vermieden werden.

Aufgabe der Erfindung ist es, eine Fördereinrichtung der eingangs beschriebenen Art zu schaffen, deren Träger rascher, einfacher und vielseitiger zu handhaben sind.

Die Aufgabe wird erfindungsgemäß durch das Merkmal des Anspruches 1 gelöst.

Der wesentliche Vorteil der kurzen Schwenkbewegung liegt darin, daß sie über der Trägerfläche, also nicht in deren Verlängerung, erfolgt und somit auch in beengter Umgebung durchführbar ist. Außerdem kann auf einfache Weise ein hängender Träger gleichzeitig an beiden Hängestangen erfaßt und diese nach dem Abheben ohne Griffwechsel etwa gleichzeitig angeklappt werden. Das gleiche gilt umgekehrt für die Bewegung aus der Ruhe in die Arbeitsstellung. Außerdem besteht die Möglichkeit, eine Hängestange auszuhängen, an die Trägerstützfläche anzuklappen und den Träger etwa mit der anderen Hängestange fluchtend auf dem Schienensystem platzsparend zu befördern bzw. "abzustellen''. Für eine Schwenkbewegung um 270° steht bei üblichen Fördersystemen der genannten Art nicht die notwendige Bodenfreiheit zur Verfügung.

Eine durch das Merkmal des Anspruches 2 gekennzeichnete Ausführungsform ermöglicht es vor allem, die Hängestangen dicht an die Trägeroberfläche anzulegen, ohne daß die nach oben versetzten Schwenklager im Wege sind. Außerdem wird die jeweils angeklappte Hängestange in der Klemmnut gegen unbeabsichtigtes Aufschwenken gesichert. Die Schwenkachse wird bei jeder Bewegung der Hängestange mitgenommen und damit auch die Klemmnut jeweils in eine bestimmte Stellung gebracht. Die lösbare Verbindung hat den Vorteil, daß Hängestangen für unterschiedliche Träger und Träger mit verschiedenen Hängestangen benutzbar sind. Dies kann sich auf Abmessungen, bei Trägern auch auf das Profil bzw. die Gestaltung der Trägerstützfläche, bei Hängestangen auch auf die form ihres trägerfernen Anhängeendes beziehen.

Die Merkmale der Ansprüche 3 bzw. 4 bis 7 sprechen jeweils vorteilhafte Ausführungsformen im Hinblick auf die Verbindung zwischen Hängestange und Schwenkachse an. Dabei ist es durch die bajonettverschlußartige Verriegelung zwischen Schwenkachse und Hängestange möglich, letztere in verschiedenen Stellungen zu haltern. Dazu gehört die Möglichkeit, die Transporthöhe des Trägers zu verringern durch Verriegeln der Hängestange im Abstand von ihren beiden Enden. Damit kommt nicht ihre ganze Länge zum Einsatz. Hieraus ergibt sich wiederum die Möglichkeit, für kurzes Hängegut erfindungsgemäße Träger untereinander zu hängen und damit die Transportleistung zu vergrößern.

Die erfindungsgemäße Anordnung der Schwenklager und die dadurch geschaffene Möglichkeit, die Hängestangen an die Trägerstützfläche anzuklappen erlaubt den Verzicht auf ein offenes Trägerprofil. Die Merkmale der Ansprüche 9 und 10 sprechen Ausführungsformen an, bei denen dieser Vorteil für eine besonders geordnete Abstützung des Transportgutes ausgenutzt wird.

Ausführungsbeispiele der Erfindung sind nachstehend anhand der Zeichnungen beschrieben. Es zeigen:

Fig. 1 in schematischer Darstellung einen Teilbereich einer erfindungsgemäßen Fördereinrichtung,

Fig. 2 in vergrößerter perspektivischer Darstellung einen Träger mit Hängestangen,

Fig. 3 die Ansicht einer Schwenkachse, und

Fig. 4 einen Schnitt nach der Schnittlinie IV - IV in Fig. 3.

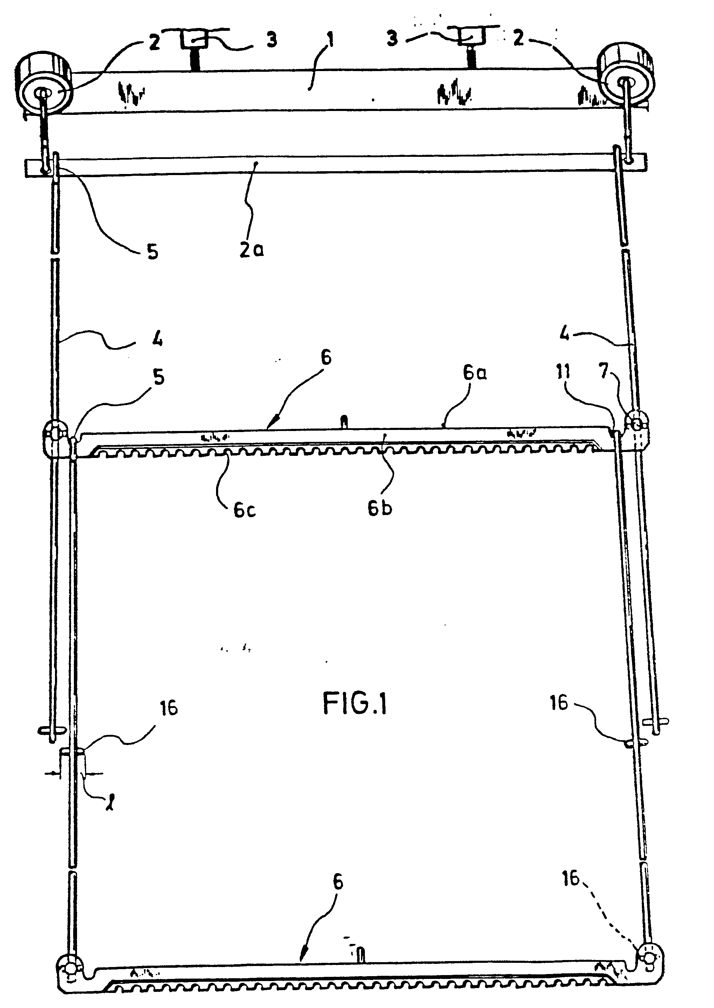

In Fig. 1 ist ein Abschnitt einer Laufschiene 1 dargestellt mit einem darauf mittels Rollensätzen 2 abgestützten Langtrolley 2a. Die zu einem ganzen System gehörige Laufschiene 1 ist mittels angedeuteter abgebrochener Halterungen 3 an der Decke eines Raumes befestigt.

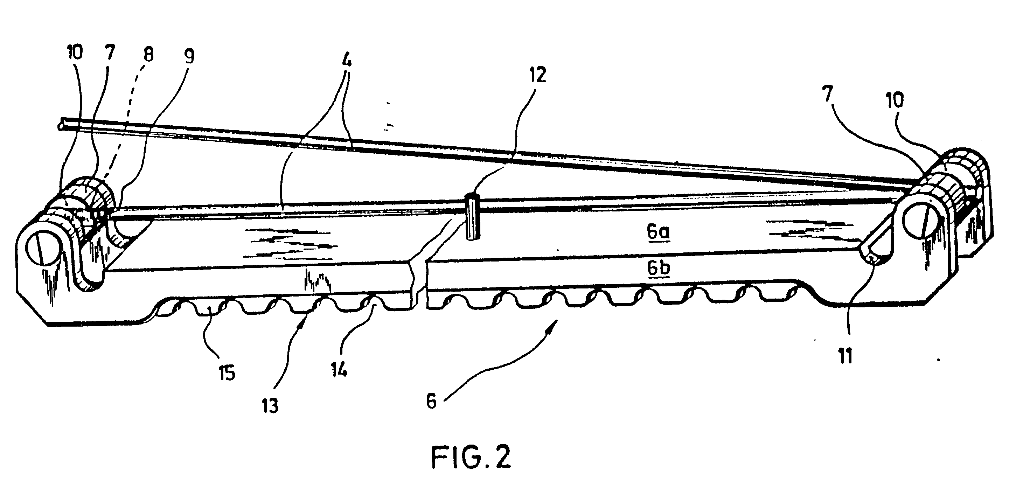

An dem Langtrolley 2a ist ein etwa schienenförmiger Träger 6 mittels Hängestangen 4 aufgehängt. Das eine Ende jeder Hängestange bildet einen offenen Haken 5, der in Form und Größe dem Querschnitt des Langtrolleys angepaßt ist. Am Träger 6 ist jede Hängestange an einer Schwenkachse 7 befestigt. Die Oberseite jedes schienenförmigen Trägers bildet eine Trägerstützfläche 6a - siehe auch Fig. 2 - für hier nicht eingezeichnetes Fördergut, beispielsweise Bekleidungsstücke auf Kleiderbügeln.

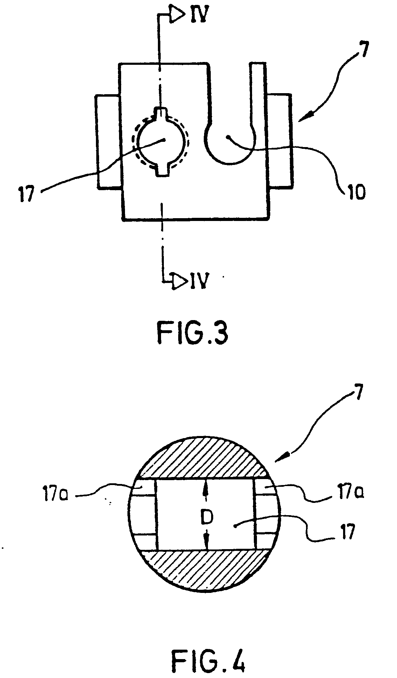

Wie insbesondefe aus der vergrößerten Darstellung in Fig. 2 hervorgeht, sind die Schwenkachsen 7 zwischen Verlängerungen der Seitenwände 6b drehbar gelagert und zwar gegenüber der Trägerstützfläche 6a nach oben versetzt. Mit jeder Schwenkachse 7 ist eine Hängestange 4 lösbar fest verbindbar, so daß die Schwenkachse die Schwenkbewegungen der Hängestange mitmacht. Die Ausführungsform nach Fig. 1 zeigt eine bajonettartige Verbindung, die später anhand der Fig. 3 und 4 genauer besprochen wird. Bei der Ausführungsform nach fig. 2 weist jede Schwenkachse 7 eine nicht durchgehende Gewindebohrung 8 auf und die Hängestange 4 an ihrem Ende ein Außengewinde 9. Neben der Gewindebohrung 8 und parallel zu ihrer Achse ist an der Schwenkachse 7 eine Klemmnut 10 angebracht, in welche die an der gegenüberliegenden Schwenkachse angebrachte Hängestange 4 einrastbar ist. Sie liegt dann dicht an der Trägerstützfläche 6a auf. Zwischen dem Lagerbereich der Schwenkachsen 7 und der Trägerstützfläche 6a bilden die Seitenflächen 6b jeweils gerundete Mulden 11. In sie sind, wie Fig. 1 zeigt, die Haken 5 weiterer Hängestangen 4 einhängbar. Damit können auch zwei oder mehr schienenförmige Träger mit einem Rollensatz transportiert werden. Auf der Trägerstützfläche 6a ist ein Zapfen 12 mittig nach oben abstehend befestigt. Er beschränkt den Rutschbereich für über die Trägerstützfläche gehängtes Fördergut. Die Unterseite 6c des schienenförmigen Trägers ist in Längsrichtung mit einer Zahnleiste 13 versehen, deren Einschnitte 14 zwischen den Zähnen 15 quer zur Längsrichtung des Trägers verlaufen.

Die Fig. 3 und 4 zeigen eine Schwenkachse für Hängestangen 4 nach Fig. 1. Wie dort angedeutet, weist jede Hängestange 4 an ihrem unteren Ende Vorsprünge 16 auf, die nach zwei Seiten abstehen. Die Schwenkachse 7 hat neben der Klemmnut 10 eine durchgehende Einrastbohrung 17. Ihr Innendurchmesser D entspricht der größten Ausdehnung 1 zwischen den beiden Enden der Vorsprünge 16. Ihr Ein- und Ausgangsbereich 17a weist jedoch einen Umriß auf, der im wesentlichen dem Querschnitt einer Hängestange plus Vorsprüngen entspricht (Fig. 3).

In der in Fig. 1 dargestellten Transportstellung hängt ein Träger 6 mittels seiner Hängestangen 4 am Langtrolley 2a. Jede Hängestange 4 des oberen Trägers ist in ihrem Schwenklager 7 mit Vorsprüngen 16 verriegelt, die sich etwa in der Mitte ihrer Länge, also im Abstand von ihren beiden Enden befinden. Ihr ebenfalls mit Vorsprüngen 16 versehener Endbereich ragt dann frei nach unten. Der untere Träger 6 ist mit den Haken 5 seiner Haltestangen 4 in die Mulden 11 neben den Schwenklagern des oberen Trägers eingehängt und seine Haltestangen 4 sind mit den Vorsprüngen 16 an ihrem hakenfernen Ende an den zugehörigen Schwenklagern 7 befestigt. Die Vorsprünge 16 sind in ihrer Erstreckung zur Längsrichtung der Haltestange so auf die Abbiegung des Hakens 5 hin abgestimmt, daß bei in der Bohrung des Schwenklagers verriegelten Vorsprüngen der Haken sich in der richtigen Stellung zum Einhängen am Langtrolley oder einem anderen Träger befindet.

Die Verriegelung einer Haltestange in einer Schwenklagerbohrung kann auch mit anderen Mitteln erreicht werden. Beispielsweise können Haltestange und Bohrung einen ovalen Umriß aufweisen, so daß durch eine Drehung ein klemmender Sitz erzielt wird. Es können auch Einkerbungen am Profil der Haltestange mit entsprechenden Raststellen in der Bohrung zusammenwirken. Einkerbungen können dabei in beliebiger Anzahl und gleichmäßigen oder wechselnden Abständen vorhanden sein.

Im Gegensatz zu der Transportstellung der Träger, in dem sich die Haltestangen etwa senkrecht zu der Haupterstreckungsrichtung der Träger befinden, zeigt Fig. 2 annähernd die Ruhe- oder Aufbewahrungsstellung eines Trägers. Die Haltestangen, hier mittels Gewinden an dem jeweiligen Schwenklager befestigt, sind dabei an die Trägerstützfläche 6a angeklappt. Diese Stellung nimmt die vom Betrachter aus hintenliegende Hängestange ein, während zur Verdeutlichung die dem Betrachter nähere Hängestange noch etwas geneigt nach oben ragt. In der angeklappten Stellung rastet jede Haltestange 4 in die Klemmnut 10 der gegenüberliegenden Schwenkachse ein und wird dadurch am Träger gehalten. In dieser Stellung benötigt der Träger wenig Platz zur Aufbewahrung. Die Schwenkbewegung jeder Haltestange erfolgt auf diese Weise nach innen, d.h. direkt auf den Träger zu. Freier Außenraum wird nur soweit benötigt, als sich die Länge jeder Haltestange über die Länge des Trägers hinaus erstreckt. Die Lagerung jeder Schwenkachse ermöglicht es, wenn notwendig, den Träger auch umgekehrt aufzuhängen, mit der Zahnleiste 13 nach oben. Kleiderbügel oder ähnliche Aufhängeorgane können dann jeweils in die Einschnitte 14 verteilt und dadurch rutschsicherer und auf Distanz gehalten werden. Bei der Verriegelungsmöglichkeit nach den Fig. 1, 3 und 4 kann gegebenenfalls die Haltestange auch von der anderen Seite der Schwenkachsenbohrung her eingesetzt werden.

Die Erfindung ist nicht auf die Ausführungsbeispiele beschränkt. So ist das Profil jedes Trägers weitgehend beliebig, und kann sogar kreisförmig sein, vorausgesetzt, daß ein Anlagebereich für die angeklappten Hängestangen zur Verfügung steht. Dabei kann der Begriff "Anlage" im Rahmen des Schützbereichs der Ansprüche durchaus eine kleine Distanz zwischen der Trägeroberfläche und der Hängestange einschließen.

Die Klemmnut 10 kann am Schwenklager auch rundumlaufen oder in Form von zwei Einschnitten angeordnet sein. Sie bietet dann die Möglichkeit, die zweite Hängestange auch dann aufzunehmen, wenn die an dem Schwenklager befestigte Hängestange sich nicht in angeklappter Stellung befindet. Dies kann z. B. der Fall sein, wenn ein Träger nur an einer Hängestange aufgehängt, platzsparend am Schienensystem befördert oder aufbewahrt werden soll.

Selbstverständlich kann sich die Oberfläche des Trägers, entsprechend gekrümmt, als Abdeckung über die Mulde 11 hin erstrecken. ferner kann die Mulde 11 ganz entfallen, wenn für das Fördergut, bzw. die Hängestangen eines weiteren Trägers eine andere Verschiebungsbegrenzung vorgesehen wird oder ein Verschieben bis an die Schwenklager in Kauf genommen wird.

## Patentansprüche

1. Fördereinrichtung, insbesondere für innerbetriebliche Hängeförderer, mit einem Laufschienensystem und mit schienenförmigen Trägern (6) zum hängenden Abstützen von Transportgut auf einer Trägerstützfläche (6a), welche Träger an beiden Enden über an quer verlaufenden Schwenkachsen (7) an ihnen gelagerte Hängestangen (4) lösbar an Rollensätzen (2) aufhängbar sind, die sich auf dem Laufschienensystem abstützen, dadurch gekennzeichnet, daß die Schwenkachsen (7) so weit in lotrechter Richtung gegenüber der Trägerlängsachse versetzt sind, daß die Hängestangen (4) durch Schwenken um 90° an eine Trägerstützfläche (6a) anklappbar sind.

2. Fördereinrichtung nach Anspruch 1, dadurch gekennzeichnet, daß die Hängestangen (4) fest mit den Schwenkachsen (7) verbindbar sind und jede Schwenkachse (7) neben der Verbindungsstelle eine Klemmnut (10) für die Hängestange (4) des anderen Endes aufweist.

3. Fördereinrichtung nach Anspruch 2, dadurch gekennzeichnet, daß die Schwenkachse (7) eine Gewindebohrung (8) für die am Ende mit einem Außengewinde (9) versehene Hängestange (4) aufweist und die Klemmnut (10) parallel zu der Gewindebohrung (8) verläuft.

4. Fördereinrichtung nach Anspruch 2, dadurch gekennzeichnet, daß die Hängestange (4) wenigstens stellenweise einen in einer Haltebohrung (10) der Schwenkachse (7) durch Drehen um etwa 90° kraft- oder formschlüssig verriegelbaren Querschnitt aufweist.

5. Fördereinrichtung nach Anspruch 4, dadurch gekennzeichnet, daß die Hängestange (4) mittels Verriegelungsvorsprüngen (16) wenigstens in ihrem Endbereich bajonettverschlußartig in einer Einrastbohrung (17) an der Schwenkachse (7) halterbar ist.

6. Fördereinrichtung nach Anspruch 5, dadurch gekennzeichnet, daß die Schwenkachse (7) eine durchgehende Einrastbohrung (17) mit dem Ausgangsbereich (17a) an beiden Öffnungsbereichen zum Verriegeln von beiden Seiten her aufweist.

7. Fördereinrichtung nach Anspruch 5, dadurch gekennzeichnet, daß die Hängestange (4) weitere Verriegelungsvorsprünge (16) im Abstand zu den Stangenenden aufweist.

8. Fördereinrichtung nach einem der Ansprüche 1 bis 7, mit Hängestangen deren trägerferne Enden in Form offener Haken gekrümmt sind, dadurch gekennzeichnet, daß jeder Träger (6) zwischen seinen Schwenkachsen (7) und der Trägerstützfläche (6a) eine querlaufende Mulde (11) für das Einhängen eines weiteren Trägers (6) mit den Haken (5) seiner Hängestangen (4) aufweist.

9. Fördereinrichtung nach wenigstens einem der Ansprüche 1 bis 8, dadurch gekennzeichnet, daß jeder Träger (6) an der seiner Trägerstützfläche (6a) gegenüberliegenden Längsseite eine sich wenigstens über einen Teil der Längsrichtung erstreckende Zahnleiste (13) mit querlaufenden Einschnitten (14) aufweist.

10. Fördereinrichtung nach Anspruch 9, dadurch gekennzeichnet, daß der Träger (6) auf seiner Trägerstützfläche (6a) eine weitere Zahnleiste aufweist, deren Breite beidseitig Platz für das Anklappen der Hängestangen (4) läßt und deren Zahnabstand von dem der unterem Zahnleiste (13) abweicht.

11. Fördereinrichtung nach einem der Ansprüche 1 bis 10, dadurch gekennzeichnet, daß die Schwenkachsen (7) zwischen entsprechend hochgezogenen Verlängerungen der Seitenwände (6a) des Trägerprofils gelagert sind.

## Claims

1. A conveyor apparatus, particularly for intro-plant suspension conveyor systems, comprising a track rail system and bar-shaped carriers (6) for the suspended support of conveyed goods on a carrier support surface (6a), said carriers being adapted to be releasably suspended from roller sets (2) travelling on said rail system by means of suspension rods (4) mounted on said carriers about transversely extending pivot axes (7) adjacent both ends thereof, characterized in that said pivot axes (7) are perpendicularly spaced from the longitudinal carrier axis so that said suspension rods (4) are adapted to be folded onto a carrier support surface (6a) by pivoting about an angle of 90°.

2. A conveyor apparatus according to claim 1, characterized in that said suspension rods (4) are adapted to be fixedly connected to said pivot axes (7), each pivot axis (7) having a clamping groove (10) for the suspension rod (4) of the other end adjacent the connection point.

3. A conveyor apparatus according to claim 2, characterized in that said pivot axis (7) comprises a threaded bore (8) for an outer thread (9) formed on the end of said suspension rod (4), said clamping groove (10) extending parallel to said threaded bore (8).

4. A conveyor apparatus according to claim 2, characterized in that at least part of said suspension rod (4) has a cross-sectional shape permitting it to be clampingly or lockingly secured in a retaining bore (10) of said pivot axis (7) by being rotated about an angle of about 90°.

5. A conveyor apparatus according to claim 4, characterized in that said suspension rod (4) is adapted to be connected in said pivot axis (7) by locking projections (16) formed at least at its end portion received in an engagement bore (17) in the manner of a bayonet coupling.

6. A conveyor apparatus according to claim 5, characterized in that said pivot axis (7) comprises an open-ended engagement bore (17) having locking engagement portions (17a) at both open ends for locking engagement from both sides.

7. A conveyor apparatus according to claim 5, characterized in that said suspension rod (4) comprises further locking projections (16) spaced from the rod end portions.

8. A conveyor apparatus according to any of claims 1 to 7, comprising suspension rods having their ends facing away from said carrier bent to the shape of a hook, characterized in that between said pivot axes (7) and said carrier support surface (6a) each carrier (6) has a transversely extending recess (11) for the suspension of a further carrier (6) by the hooks (5) of its suspension rods (4).

9. A conveyor apparatus according to any of claims 1 to 8, characterized in that at its longitudinal side extending opposite its carrier support surface (6a) each carrier (6) has a tooth rack (13) extending over at least part of its length and formed with transversely extending notches (14).

10. A conveyor apparatus according to claim 9, characterized in that said carrier support surface (6a) of said carrier (6) is provided with a further tooth rack of a width leaving sufficient space on both saides for said suspension rods (4) to be folded down thereon, the tooth spacing of said further tooth rack being different from that of the lower tooth rack (13).

11. A conveyor apparatus according to any of claims 1 to 10, characterized in that said pivot axes (7) are mounted between correspondingly raised extensions of the sidewalls (6a) of the carrier profile.

**Revendications**

1. Convoyeur, notamment pour dispositifs de convoyage suspendu à usage industriel interne, comprenant un système à rails de roulement et des porteurs (6) en forme de rails assurant le soutien, en suspension, d'objets transportés sur une surface de soutien (6a) des porteurs, les dits porteurs pouvant être suspendus de manière libérable par leurs deux extrémités, par l'intermédiaire de tiges de suspension (4) qui y sont montées sur les axes de pivotement (7) s'étendant transversalement, à des jeux de galets (2) prenant appui sur le système à rails de roulement, caractérisé par le fait que les axes de pivotement (7) sont décalés dans le sens vertical, par rapport à l'axe longitudinal des porteurs, de telle porte que les tiges de suspension (4) puissent être rabattues, par pivotement de 90°, sur une surface de soutien (6a) d'un porteur.

2. Convoyeur selon la revendication 1, caractérisé par le fait que les tiges de suspension (4) peuvent être reliées rigidement aux axes de pivotement (7), et chaque axe de pivotement (7) présente, à côté de la zone de liaison, une rainure de coincement (10) pour la tige de suspension (4) de l'autre extrémité.

3. Convoyeur selon la revendication 2, caractérisé par le fait que l'axe de pivotement (7) présente un trou taraudé (8) pour la tige de suspension (4) pourvue d'un filetage externe (9) à son extrémité, et la rainure de coincement (10) s'étend parallèlement au trou taraudé (8).

4. Convoyeur selon la revendication 2, caractérisé par le fait que la tige de suspension (4) possède, au moins par zones, une section pouvant être verrouillée mécaniquement ou par concordance de formes, par rotation d'environ 90°, dans un perçage de retenue (10) de l'axe de pivotement (7).

5. Convoyeur selon la revendication 4, caractérisé par le fait que la tige de suspension (4) peut être retenue au moins dans sa région extrême en une solidarisation du type baïonnette, au moyen de saillies de verrouillage (16), dans un perçage d'encliquetage (17) pratiqué sur l'axe de pivotement (7).

6. Convoyeur selon la revendication 5, caractérisé par le fait que l'axe de pivotement (7) présente un perçage ininterrompu d'encliquetage (17) dont la région de sortie (17a) se trouve dans les deux zones d'ouverture, pour permettre un verrouillage à partir des deux côtés.

7. Convoyeur selon la revendication 5, caractérisé par le fait que la tige de suspension (4) présente d'autres saillies de verrouillage (16) à distance des extrémités de cette tige.

8. Convoyeur selon l'une des revendications 1 à 7, muni de tiges de suspension dont les extrémités éloignées des porteurs sont cintrées en forme de crochets ouverts, caractérisé par le fait que chaque porteur (6) possède, entre ses axes de pivotement (7) et la surface de soutien (6a) du porteur, une cuvette (11) qui s'étend transversalement et est destinée à l'accrochage d'un autre porteur (6), par les crochets (5) de ses tiges de suspension (4).

9. Convoyeur selon au moins l'une des revendications 1 à 8, caractérisé par le fait que chaque porteur (6) comporte, sur le côté longitudinal opposé à sa surface de soutien (6a), une barrette crantée (13) qui s'étend au moins sur une partie de la direction longitudinale, et présente des crans (14) s'étendant transversalement.

10. Convoyeur selon la revendication 9, caractérisé par le fait que le porteur (6) présente, sur sa surface de soutien (6a), une autre barrette crantée dont la largeur réserve, de part et d'autre, une place pour le rabat des tiges de suspension (4), et dont l'entredent diffère de celui de la barrette crantée inférieure (13).

11. Convoyeur selon l'une des revendications 1 à 10, caractérisé par le fait que les axes de pivotement (7) sont montés entre des prolongements, rehaussés en conséquence, des parois latérales (6a) du profil du porteur.

FIG.1

FIG.2

FIG.3

FIG.4